## Europäisches Patentamt
## European Patent Office
## Office européen des brevets

(11) Publication number: **0 197 569**
**A2**

(12)
# EUROPEAN PATENT APPLICATION

(21) Application number: **86200255.7**

(22) Date of filing: **19.02.86**

(51) Int. Cl.⁴: **B 62 M 1/14**

(30) Priority: **01.03.85 BE 2060634**

(43) Date of publication of application:
**15.10.86 Bulletin 86/42**

(84) Designated Contracting States:
**AT CH DE FR GB IT LI LU NL SE**

(71) Applicant: **De Weert, Paul H.**
**Corluylei 39**
**B-2210 Borsbeek(BE)**

(72) Inventor: **De Weert, Paul H.**
**Corluylei 39**
**B-2210 Borsbeek(BE)**

(74) Representative: **Donné, Eddy**
**M.F.J.Bockstael Arenbergstraat 13**
**B-2000 Anvers(BE)**

(54) **Manpower-driven vehicle.**

(57) A manpower-driven vehicle with the characteristic that it consists essentially of a number of wheels (1, 2); a frame (3) supported by the wheels (1, 2); drive mechanisms (4) to transmit the power to the wheels (1, 2), consisting mainly of a rod (7) that moves back and forward and a transmission (8) to convert the movement of the rod (7) into a rotation of the wheels (1,2); and a seat (5).

Fig.1

## "Manpower-driven vehicle"

This invention concerns a manpower-driven vehicle, in other words, a vehicle whose motive power is provided by manpower acting on the vehicle's drive mechanisms.

In particular, it concerns a vehicle whose drive is provided mainly by back-and-forward movement of a rod, such that motive power is provided during the pull stroke only.

In a preferred construction, the vehicle is constructed such that the drive, and, in particular, the movements to be made by the person providing the motive power, bears a close resemblance to the drive mechanisms of a competition rowboat and the movements made by the rower. It is therefore our aim to use this vehicle in its preferred form as a training device for rowers.

In the preferred construction, the vehicle is constructed in two-wheeler form.

Different types of manpower-driven vehicles are already known. In a first well-known type, the motive power is provided mainly by means of power transmission through the legs of the person driving and/or steering the vehicle. It is clear that the best known example of this category is the conventional bicycle.

In addition, manpower-driven vehicles are also known with the motive power provided by means of arms as well as legs.

Both the well-known versions present the disadvantage that only a part of the human potential energy is converted into power that is applied to the drive mechanisms of the vehicles concerned. The object of the invention therefore consists of a manpower-driven vehicle in which the maximum power that can be developed by a person is almost fully transmitted to the drive mechanisms of the vehicle.

For this purpose, the invention consists of a manpower-driven vehicle of the type that consists of a number of wheels, a frame supported by the wheels, and drive mechanisms to transmit the man power to the wheels; the characteristic is that the drive mechanisms are comprised essentially of a rod that moves back and forward and a transmission to convert the movement of the rod into rotation of the wheels.

With a view to give a better demonstration of the characteristics of the invention, a number of preferred constructions are described below, as examples only, having in no way a limiting function, with references to the accompanying drawings, in which:

Figure 1 represents a manpower-driven vehicle according to the claim;

Figure 2 represents an overhead view of the vehicle shown in Figure 1;

Figure 3 represents a sectional view in the direction of line III-III in Figure 1;

Figure 4 represents a sectional view in the direction of line IV-IV in Figure 1;

Figure 5 represents a variation of the construction shown in Figure 1;

Figure 6 represents a sectional view in the direction of line VI-VI in Figure 5;

Figure 7 represents another version of the vehicle according to the claim, in which rear wheel drive is provided;

Figure 8 represents an overhead view of the vehicle shown Figure 7.

The constructions represented in the figures are two-wheelers equipped with a drive according to the claim.

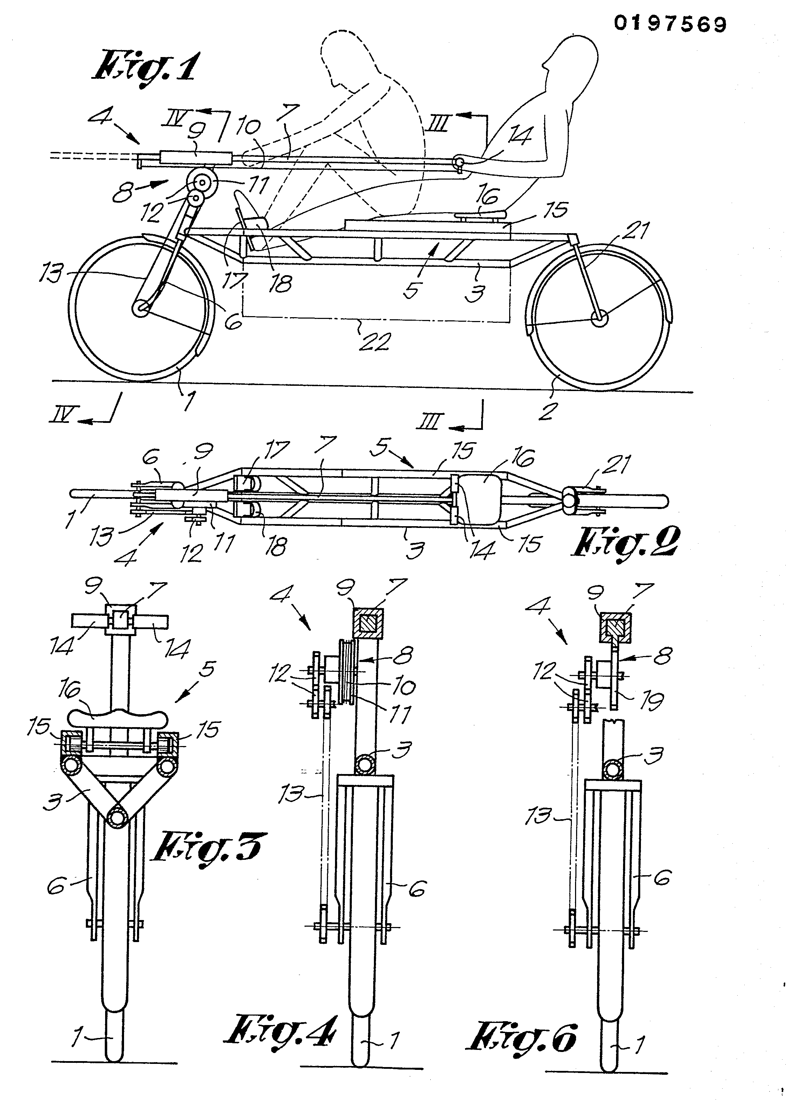

In the version shown in Figure 1, the manpower-driven vehicle consists essentially of a front wheel 1, a rear wheel 2, a frame 3 secured between the wheels, drive mechanisms 4, and a seat 5 for the person providing the motive power.

In this construction, the frame 3 consists essentially of an arrangement of longitudinal tubing, the front end of which is provided with an adjustable front fork 6, in which the front wheel 1 is secured, to permit steering of the vehicle.

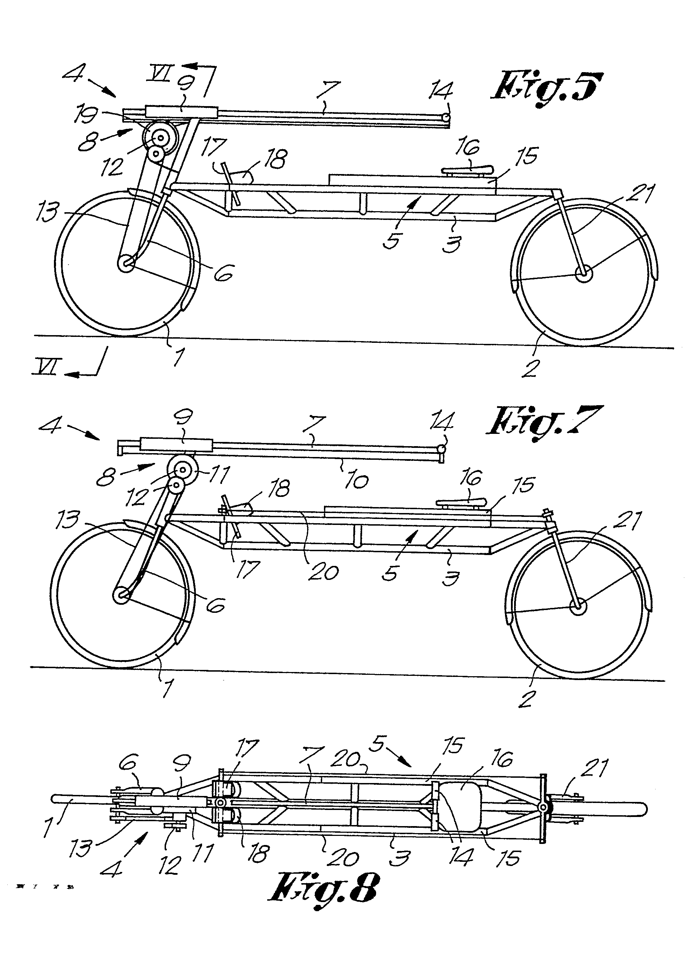

The drive mechanism consists essentially of, on the one hand, a rod 7 and, on the other hand, a transmission 8 to convert the movement of the rod 7 into the rotation of the front wheel 1. The rod 7 is mobile back and forward along the longitudinal axis of the vehicle inside a tube 9. A cable or belt 10 is secured between the ends of the rod 7, and runs parallel to the rod, but does not pass with it through the tube 9. Below the tube 9 this cable 10 is wound one or more times around a belt- or cable-sheave 11. A specific representation of this is given inthe sectional view in Figure 4.

The belt- or cable-sheave 11 is connected to the front wheel 1 in a suitable manner, in both cases, so that the wheel is driven. This can, for example, be accomplished by means of a gear wheel coupling 12, and a coupling by chain 13.

The drive mechanisms also include a free wheel coupling, such that power is transmitted to the front wheel 1 during the rod 7 return stroke only, and that during the time that the rod 7 is being pushed forward through the tube 9, the front wheel is in free wheel motion. This free wheel coupling can, for example,be built into the belt- or cable-sheave 11.

The drive mechanisms have a rigid connection to the front fork 6, and can revolve together with it in the horizontal plane. Handles 14 are, of course, provided at the end of the rod directed towards the rider.

Since the vehicle in its preferred construction will be used as training equipment for rowers, the examples will include representations of vehicles in which the body movements of the rider, and the power they generate, coincide generally with the body movements that a rower makes in a competition rowboat, as well as with the matched movements. This is accomplished by, firstly, making use of the drive mechanisms mentioned above, and, secondly, constructing the seat 5 similar to that of a rowboat. For this purpose, the seat 5 consists of a combination of tracks 15; also known as slidings; a seat 16 that slides along the tracks 15; and two individual foot rests or a singler rest 17 for both feet.

The seat 16 and the foot rests 17 are located at almost the same height. The foot rests 17 are equipped with sports shoes, foot straps 18, or equivalent, such that the feet can be secured and withdrawn in a rapid and simple motion.

The seat 5, which is secured to the frame 3, can, of course, be equipped with a number of adjustments as found in rowboats. For example, the seat 16 can be provided with a height adjustment and/or longitudinal adjustment device, the foot rest 17 can be radially adjustable and equipped with a longitudinal adjustment, etc.

The operation of the vehicle, and particularly of the drive, can easily be deduced from the figures. in the initial configuration, the rod 7 is in full forward position with respect to the rest of the vehicle. As the person draws the rod 7 backwards through the tube 9, the transmission 8 is driven, so that the vehicle also starts. While the rod 7 is being pressed forward, the free wheel coupling referred to above comes into operation so that the drive is cut off. The vehicle can be steered by turning the rod 7 in the horizontal plane, to cause an angular deflection of the drive mechanisms 4, the front fork 6, and the front wheel 1 inserted in the fork, with respect to the rest of the vehicle.

Since the rider can rest his full weight on the foot rests or foot rest 17, it is clear that maximum man power can be exerted in driving the vehicle. In the construction of the invention that is shown in Figures 5 and 6, the rod 7 is constructed in the form of a rack. In this case, the belt- or cable-sheave 11 referred to above is replaced by a gear wheel 19. The operation is analogous to that of the version shown in Figure 1.

In Figures 7 and 8 a further construction version of the invention is represented, in which the two-wheeler is steered by foot steering. For this purpose, the foot rest is made rotatable, and suitably connected to the rear fork 21 by means of wires 20, so that the rear fork naturally becomes adjustable. Movement of the foot rest 17 by the feet will then naturally result in equivalent movement of the rear wheel 2.

It is clear that this type of manpower-driven vehicle according to the claim can be constructed in a number of alternative versions. In one variation, for example, the drive mechanism is not connected to the front wheel 1, but simply has a suitable transmission link to the rear wheel 2.

It goes without saying that the vehicle according to the claim is provided with an adequate braking system.

In a special version, a baggage space 22 that can be suitably secured under the structure of the vehicle can also be provided, as shown schematically in Figure 1.

The present invention is in no way limited to the versions described as examples and represented in the accompanying drawings. This type of manpower-driven vehicle, with its constituent parts, can be constructed in a wide range of forms and dimensions without going beyond the terms of the claim.

What is claimed

1. - A manpower-driven vehicle with the characteristic that it consists mainly of a number of wheels (1, 2); a frame (3) supported by the wheels (1, 2); drive mechanisms (4) to transmit the power to the wheels, consisting mainly of a rod (7) that moves back and forward and a transmission (8) to convert the movement of the rod into a rotation of the wheels (1, 2); and a seat (5).

2. - The vehicle claimed in 1., with the characteristic that the seat consists mainly of tracks (15); a seat (16) that can be moved along these tracks; and foot rests (17).

3. - The vehicle claimed in 1. or 2., with the characteristic that the rod (7) that is mobile back and forward along the long-itudional axis of the vehicle is secured in a tube (9), and that the transmission (8) comprises a free wheel coupling, so that the motive power is only provided to the vehicle during the return stroke of the rod (7).

4. - The vehicle claimed in one of the preceding paragraphs, with the characteristic that the transmission (8) consists of a cable or belt (10) secured between the ends of the rod (7); a belt- or cable-sheave (11), around which the cable or belt (10) is wound at least once, and a coupling between the belt- or cable-sheave (11) and one of the wheels (1, 2) of the vehicle.

5. - The vehicle claimed in one of the paragraphs from 1. to 3. inclusive, with the characteristic that the rod (7) is constructed in the form of a rack, and that the transmission (8) consists of a gear wheel (19) that mates with the teeth of the rack, as well as a coupling between this gear wheel (18) and one of the wheels

0197569

(1, 2) of the vehicle.

6. – The vehicle claimed in one of the preceding paragraphs, withthe characteristic that the drive mechanisms (4) are connected to the front wheel (1).

7. – The vehicle claimed in one of the paragraphs from 1. to 5. inclusive, with the characteristic that the drive mechanisms (4) are connected to the rear wheel (2).

8. – The vehicle claimed in one of the preceding paragraphs, with the characteristic that steering is accomplished by means of a pivoting front wheel (1).

9. – The vehicle claimed in 8., with the characteristic that the drive mechanisms (4) are rigidly connected to the front fork (6) of the front wheel (1), so that the front wheel is steered by lateral movement of the rod (7).

10. – The vehicle claimed in one of the paragraphs from 1. to 7., with the characteristic that the steering fo the vehicle is accomplished by a combination of pivoting foot rests (17), a pivoting rear wheel (2), and wires (19) that form a connection between the foot rests (17) and the rear fork (20).

11. – The vehicle claimed in one of the preceding paragraphs, with the characteristic that the seat (5) and the rod (7) have a configuration that coincides with the configuration of theaccessories of the seat of a rowboat.

Fig.1

Fig.2

Fig.3

Fig.4

Fig.5

Fig.6

0197569

*Fig.5*

*Fig.7*

*Fig.8*